(19) Europäisches Patentamt

European Patent Office

Office européen des brevets

(11) **EP 0 504 026 B1**

## (12) FASCICULE DE BREVET EUROPEEN

(45) Date de publication et mention
de la délivrance du brevet:
**05.06.1996 Bulletin 1996/23**

(51) Int. Cl.⁶: **B23K 26/06**

(21) Numéro de dépôt: **92400594.5**

(22) Date de dépôt: **06.03.1992**

(54) **Procédé et dispositif optique statique pour irradiation laser d'un produit métallique en mouvement et son application au traitement de tôles magnétiques**

Optische statische Verfahren und Vorrichtung zur Laserbestrahlung eines metallischen Produktes und dessen Anwendung zur magnetischen Bleichbehandlung

Optical static process and device for moving metal product irradiation and its application to magnetic sheet metal treatment

(84) Etats contractants désignés:
**AT BE CH DE DK ES FR GB GR IT LI LU NL PT SE**

(30) Priorité: **08.03.1991 FR 9102850**

(43) Date de publication de la demande:
**16.09.1992 Bulletin 1992/38**

(73) Titulaire: **UGINE S.A.**
**F-92800 Puteaux (FR)**

(72) Inventeurs:
• **Brassart, Gilles**
**F-91400 Orsay (FR)**
• **Riboulet, Gilles**
**F-91390 Morsang sur Orge (FR)**
• **Skrzypczak, Jacky**
**F-62590 Oignies (FR)**

• **Bavay, Jean-Claude**
**F-62330 Isbergues (FR)**
• **Vaugeois, Pascal**
**F-78120 Rambouillet (FR)**

(74) Mandataire: **Polus, Camille et al**
**c/o Cabinet Lavoix**
**2, Place d'Estienne d'Orves**
**75441 Paris Cedex 09 (FR)**

(56) Documents cités:
**EP-A- 0 102 732      EP-A- 0 140 663**
**EP-A- 0 300 465**

• **PATENT ABSTRACTS OF JAPAN, vol. 14, no. 107 (M-942)[4050], 27 février 1990; & JP-A-1 309 794 (MATSUSHITA ELECTRIC IND. CO., LTD) 14-12-1989**
• **IDEM**

Printed by Rank Xerox (UK) Business Services
2.11.7/3.4

## Description

La présente invention concerne un procédé et un dispositif optique pour le traitement par irradiation laser au défilé de la surface d'un produit en matériau magnétique et notamment d'une bande de tôle en acier, dispositif équipé d'une source de rayonnement laser, rayonnement dont l'impact est constitué de traits continus sur toute ou partie de la largeur du produit traité, perpendiculaires ou inclinés par rapport à la direction de défilement et régulièrement espacés.

Il est connu que les pertes magnétiques d'un certain nombre de produits, telles que les tôles à usage électromagnétique, peuvent être réduites de manière très significative par irradiation de la surface du matériau avec un rayonnement émis par un laser.

La technique classique de traitement à l'aide d'un laser d'un produit mince magnétique utilise le balayage, notamment grâce à un système optique rotatif, d'un faisceau laser ponctuel focalisé, perpendiculairement à la direction de déplacement du produit.

Des systèmes de balayage à l'aide d'un faisceau laser focalisé perpendiculairement au sens de laminage de tôles en mouvement décrits dans les documents EP-A-0 140 663 et EP-A-0 102 732, sont complexes et comportent des éléments en mouvement rotatifs tels que miroirs, moteurs, qui nécessitent un contrôle, une mise au point donc, un entretien constant.

Un autre état de la technique est illustré par le document JP-A-1 309 794. On relèvera que ce document concerne l'irradiation laser d'un film déposé en phase vapeur et que l'anamorphoseur décrit est dépourvu de prisme.

La présente invention concerne un procédé de traitement par irradiation laser au défilé de la surface d'un produit magnétique dans lequel on maîtrise la distribution d'énergie à l'aide d'un résonateur à miroir de sortie à réflectivité variable, le faisceau laser étant anamorphosé de manière à ce que la ligne sur le produit soit d'épaisseur constante. on effectue simultanément sur toute une ligne rectiligne et pratiquement transversale correspondant à la largeur du produit traité, l'irradiation laser de façon à ce que la distribution d'énergie soit uniforme sur toute la ligne.

La présente invention concerne également un dispositif avec une configuration optique plus simple à mettre en oeuvre car statique : ce dispositif assure la transformation d'un faisceau électromagnétique en un trait dont la longueur est pratiquement égale à la largeur du produit ou de la bande de tôle à traiter en mouvement et dont la largeur est fonction de la focalisation désirée.

L'invention a également pour objet un dispositif pour le traitement par irradiation laser au défilé de la surface d'une bande et notamment d'une tôle d'acier magnétique comprenant une source laser, une combinaison optique disposée entre la source et le produit, composée de lentilles dont les axes focaux sont orthogonaux à la direction d'émission de la source de manière à transformer le faisceau laser issu de la source en un trait focalisé sur la surface du produit à traiter, approximativement transversalement à la direction du mouvement du produit, caractérisé en ce que la source laser est munie d'un miroir de sortie à réflectivité variable et d'un anamorphoseur à au moins un prisme ovalisant le faisceau incident et que la combinaison optique est composée de lentilles dont au moins une est sensiblement cylindrique et divergente, ayant un axe focal parallèle à la direction d'ovalisation de l'anamorphoseur.

Les autres caractéristiques de l'invention sont :

- la combinaison optique comprend une lentille divergente proche de la source et une lentille convergente proche du produit;
- la lentille convergente proche du produit à traiter est une gentille cylindro-torique de focalisation;
- le rayonnement laser est pulsé à une fréquence inférieure à 500 Hertz, et de préférence entre 10 et 100 Hertz;
- la durée de l'impulsion est comprise entre 10 ns et 10 ms et de préférence d'environ 0,2 ms;
- la longueur du trait occupe toute la largeur du produit et sa largeur est comprise dans l'intervalle 10 à 500 µm;
- la source de rayonnement est un laser Nd = YAG , un laser au $CO_2$, un laser solide semi-conducteur constitué d'au moins une diode.

D'autres caractéristiques de l'invention ressortiront de la lecture de la description et des revendications qui suivent ainsi que de l'examen des dessins annexés, donnés seulement à titre d'exemple, sur lesquels :

- la Figure 1 est une vue schématique en perspective d'un mode de réalisation d'un dispositif selon l'invention;
- la Figure 2 est une vue de côté du dispositif selon l'invention;
- la Figure 3 représente un exemple d'anamorphoseur à deux prismes et précise la forme des sections du faisceau avant et après l'anamorphose.

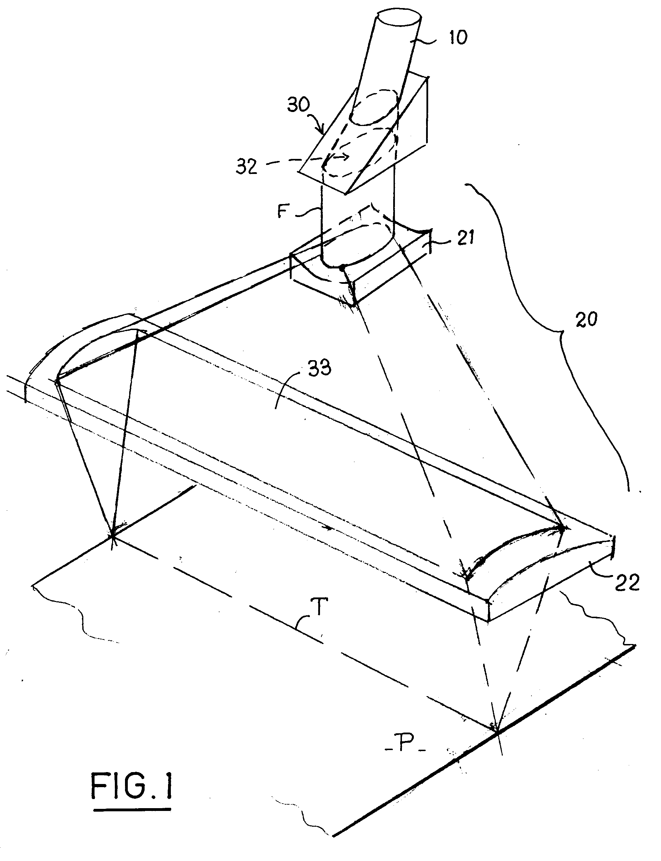

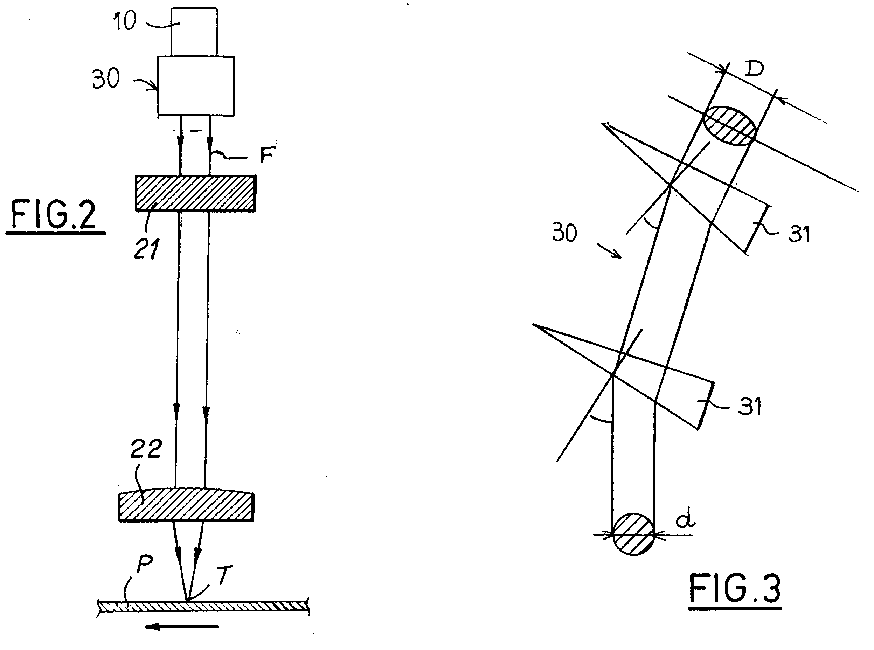

Les Figures 1 et 2 présentent schématiquement deux lentilles 21 et 22 d'une combinaison 20 dans deux plans perpendiculaires. La lentille 21 est cylindrique divergente dans le plan défini par la largeur du produit P. Elle produit un faisceau divergent dont l'épaisseur est égale au diamètre du faisceau F incident émis par un laser 10. La lentille 22 est cylindrique convergente. Elle focalise la lumière selon un trait T et permet de définir et régler l'épaisseur ou largeur du trait.

Le faisceau laser incident est issu d'un résonateur à miroir de sortie, non représenté, à réflectivité variable qui conditionne le faisceau de façon à ce que la distribution de l'énergie du trait de lumière focalisé soit pratiquement uniforme. Par ailleurs, le faisceau passe initialement dans un anamorphoseur à prisme 30 composé dans l'exemple représenté sur la Figure 3 de deux prismes 31. L'anamorphoseur 30 ovalise le faisceau de la source 10 pour former un faisceau elliptique, comme représenté par la section 32, de manière à ce que l'étirement du faisceau par les lentilles cylindriques soit sensiblement uniforme en densité d'énergie comme représenté sur la section 33 de la Figure 1. Le faisceau incident attaque les prismes sous l'incidence de Brewster. Dans ces conditions et si les prismes ont le même indice n de réfraction, le rapport d'anamorphose est défini par D/d et est égal à $n^2$.

Pour des traits focalisés de grandes dimensions, l'onde cylindrique qui se propage entre les deux lentilles, s'éloigne fortement du critère de Rayleigh calculé à partir de l'onde plane. Dans ce cas, la lentille 22 est complexe et s'apparente à une lentille cylindro-torique. Pour des raisons de fabrication, cette dernière peut être faite en plusieurs tronçons.

La lentille 22 présente l'avantage majeur de créer des traits de lumière de grande longueur sans aberration importante et d'assurer une caractéristique homogène de la tôle magnétique traitée.

Cependant, le fait d'effectuer, simultanément, sur toute une ligne correspondant à une largeur du produit traité, l'irradiation laser assure une homogénéité de la distribution en surface des impacts laser et de ce fait des caractéristiques magnétiques homogènes audit produit.

L'efficacité de l'invention a été constatée en traitant des tôles à grains orientés de texture de Goss (110) [001], à haute perméabilité, dont la croissance sélective des grains pendant la recristallisation secondaire est contrôlée par les inhibiteurs MnS et AlN. L'invention est applicable quel que soit le procédé de fabrication de la tôle à haute perméabilité qui a dans cet exemple de gros grains, typiquement de 5 à 25 mm de taille moyenne. Il est donc particulièrement avantageux de les traiter par un rayonnement laser afin d'affiner les domaines magnétiques et de réduire les pertes magnétiques en Watt/Kg.

Un essai a été conduit avec un laser Nd : YAG (grenat d'yttrium et aluminium dopé au néodyme) émettant un rayonnement de longueur d'onde 1,06 µm. Une fréquence de pulsation du laser étant fixée, on fait varier la distance entre les traits en agissant sur la vitesse de défilement du produit à traiter dont le sens du déplacement est repéré par une flèche sur la Figure 2. La tôle à grains orientés de texture de Goss (110) [001], qui a subi le traitement par irradiation laser, était revêtue d'un revêtement isolant à base de phosphate et de silice qui exerce une influence bénéfique sur le niveau des pertes en Watt/Kg en imposant l'équivalent d'une contrainte de traction parallèle à la direction de laminage. Un apport d'énergie trop important est susceptible de dégrader le revêtement, ce qui rendrait nécessaire de soumettre le produit traité par irradiation laser à un deuxième traitement d'isolation. L'absence de dégradation du revêtement est due au fait que l'adsorption du rayonnement laser par le revêtement de la tôle est faible.

L'intervalle entre les traits produits par le faisceau laser sur la tôle a été fixé à 5 mm. Cette valeur peut être ajustée en fonction de la taille moyenne des grains.

Le Tableau 1 présente l'influence du traitement laser sur l'amélioration de pertes en Watts. Dans cet exemple, la fréquence de pulsation du laser est de 10 Hz. La durée de l'impulsion électromagnétique est de 0,2 ms et l'énergie par impulsion est de l'ordre de 1 Joule, de préférence comprise entre 0,8 et 1,1 Joule. La largeur du trait d'impact est de l'ordre de 100 µm.

$P_0$ et $P_1$ représentent respectivement à 1,7 Tesla et 50 Hertz les pertes magnétiques en Watt/kg avant et après irradiation laser à l'aide du dispositif optique selon l'invention des échantillons prélevés dans une tôle à haute perméabilité d'épaisseur de 0,23 mm et ayant subi un recuit de relaxation de contraintes de découpage. Des réductions des pertes pouvant atteindre 20% ont été observées pour des réglages appropriés, sans dégradation du revêtement.

$B_o$ et $B_1$ représentent l'induction sous un champ de 800 A/m avant et après le traitement laser. Les valeurs de $B_o$ et $B_1$, avant et après traitement laser, sont pratiquement identiques.

La durée de l'impulsion électromagnétique dépend à la fois de la nature des matériaux et de la distribution temporelle de l'énergie apportée. Cette durée est toutefois supérieure à 10 ns et inférieure à 10 ms.

Les caractéristiques magnétiques après traitement laser dépendent de la perméabilité et de la dimension moyenne des gains de l'échantillon à traiter. Dans les conditions définies auparavant, le pourcentage moyen d'amélioration des pertes magnétiques en watt/Kg obtenu avec un grand nombre de tôles de haute perméabilité, d'épaisseur 0,23 mm, est de l'ordre de 12% pour une densité d'énergie du rayonnement d'environ 12 Joules/$cm^2$. L'amélioration est fonction de l'énergie apportée mais, au-delà d'une densité d'énergie donnée d'environ 20 Joules/$cm^2$, une dégradation du revêtement est observée. Le seuil de détérioration du revêtement varie avec la nature et les caractéristiques en absorption du revêtement ainsi qu'avec le profil de la distribution spatiale de l'énergie.

Les pertes magnétiques d'une tôle à haute perméabilité dépendent de l'épaisseur de la tôle. Dans les mêmes conditions que précédemment, le pourcentage moyen d'amélioration des pertes a été de 8,6% avec des tôles d'épaisseur 0,27 mm.

L'homogénéité de la distribution d'énergie influence le degré d'amélioration des pertes. Pour une même distance entre traits et pour une exploration des durées des impulsions électromagnétiques, les densités d'énergie varient mais le pourcentage d'amélioration moyen des pertes en Watt des échantillons de 0,23 mm d'épaisseur reste compris entre environ 11 et 12%.

Pour obtenir les effets désirés, il convient de veiller avec attention à l'aspect temporel de l'apport, du dépôt d'énergie par le faisceau laser, faute de quoi, il est particulièrement difficile d'aboutir à de bonnes performances magnétiques sans dégrader le revêtement.

Les lasers à pompage sélectif par diodes-lasers ou les édifices de diodes-lasers mis en phase et ordonnés spatialement peuvent se substituer économiquement aux lasers à solide à pompage classique qui utilisent des lampes à éclairs pour le pompage optique.

L'intérêt de l'invention est de permettre un affinement des domaines magnétiques à l'aide de l'anamorphose d'un faisceau laser, obtenu grâce à un dispositif optique statique d'un coût de construction, de fonctionnement et d'entretien nettement moins élevé que celui des techniques dynamiques qui consistent à déplacer le spot de focalisation d'un faisceau laser.

TABLEAU I

| Durée de l'impulsion (ms) | $P_0$ | $B_0$ | $P_1$ | $B_1$ | Réduction des pertes (%) | Dégradation du revêtement | Energie par impulsion |
|---|---|---|---|---|---|---|---|
| 0,2 | 0,891 | 1,924 | 0,754 | 1,920 | 15,4 | non | 0,9 |
| 0,2 | 0,869 | 1,942 | 0,726 | 1,940 | 16,4 | non | 0,8 |
| 0,2 | 0,880 | 1,951 | 0,717 | 1,952 | 18,5 | non | 0,8 |
| 0,2 | 0,894 | 1,941 | 0,723 | 1,940 | 19,1 | non | 0,8 |
| 0,2 | 0,910 | 1,920 | 0,750 | 1,920 | 17,6 | non | 0,9 |
| 0,2 | 0,904 | 1,943 | 0,721 | 1,939 | 20,2 | non | 0,9 |
| 0,2 | 0,910 | 1,933 | 0,725 | 1,933 | 20,3 | oui | 1,1 |
| 0,2 | 0,875 | 1,926 | 0,729 | 1,925 | 16,7 | oui | 1,1 |
| 0,2 | 0,944 | 1,923 | 0,755 | 1,912 | 20 | oui | 1,1 |
| Espacement entre les traits : 5 mm. | | | | | | | |

## Revendications

**1.** Dispositif pour le traitement par irradiation laser au défilé de la surface d'une bande et notamment d'une tôle d'acier magnétique comprenant une source Laser (10), une combinaison optique disposée entre la source (10) et le produit (P), composée de lentilles dont les axes focaux sont orthogonaux a la direction d'émission de la source (10) de manière à transformer le faisceau laser issu de la source (10) en un trait (T) focalisé sur la surface du produit (P) à traiter, approximativement transversalement à la direction du mouvement du produit (P), caractérisé en ce que la source laser est munie d'un miroir de sortie à réflectivité variable et d'un anamorphoseur (30) a au moins un prisme ovalisant le faisceau incident et que la combinaison optique (20) est composée de lentilles dont au moins une est sensiblement cylindrique et divergente, ayant un axe focal parallèle à la direction d'ovalisation de l'anamorphoseur.

**2.** Dispositif selon la revendication 1, caractérisé en ce que la combinaison optique comprend une lentille divergente (21) proche de la source 10) et une lentille convergente (22) proche du produit (P).

**3.** Dispositif selon les revendications 1 et 2, caractérisé en ce que la lentille convergente (22) proche du produit (P) à traiter est une lentille cylindrotorique de focalisation.

**4.** Dispositif selon l'une quelconque des revendications 1 a 3, caractérisé en ce que le rayonnement laser est pulsé.

**5.** Dispositif selon la revendication 4, caractérisé en ce que la fréquence de pulsation est inférieure à 500 Hertz.

**6.** Dispositif selon la revendication 4, caractérisé en ce que la fréquence de pulsation est comprise dans l'intervalle 10 à 100 Hertz.

**7.** Dispositif selon les revendications 4 à 6, caractérisé en ce que la durée de l'impulsion est comprise entre 10 ns et 10 ms.

8. Dispositif selon la revendication 7, caractérisé en ce que la durée de l'impulsion est d'environ 0,2 ms.

9. Dispositif selon l'une quelconque des revendications 1 à 8, caractérisé en ce que la longueur du trait (T) est telle qu'il occupe toute la largeur du produit (P) en mouvement et que sa largeur est comprise dans l'intervalle 10 à 500 μm.

10. Dispositif selon l'une quelconque des revendications 1 à 9, caractérisé en ce que la source (10) de rayonnement est un laser Nd = YAG .

11. Dispositif selon l'une quelconque des revendications 1 à 10, caractérisé en ce que la source (10) de rayonnement est un laser $CO_2$.

12. Dispositif selon l'une quelconque des revendications 1 à 11, caractérisé en ce que la source (10) de rayonnement est un laser solide semi-conducteur constitué d'au moins une diode.

13. Procédé d'utilisation du dispositif selon les revendications 1 à 12 pour le traitement par irradiation laser au défilé de la surface d'une bande et notamment d'une tôle en acier, caractérisé en ce qu'on maîtrise la distribution d'énergie à l'aide du résonateur à miroir de sortie à réflectivité variable, et de l'anamorphoseur (30), la combinaison optique (20) étant disposée de manière à ce que l'on effectue, simultanément, sur toute une ligne rectiligne et pratiquement transversale correspondant à la largeur du produit traité, l'irradiation laser de façon à ce que la distribution d'énergie soit uniforme sur toute la ligne.

## Claims

1. Device for the treatment by laser irradiation of the surface of a moving strip and in particular of a magnetic steel sheet comprising a laser source (10), an optical combination disposed between the source (10) and the product (P), composed of lenses whereof the focal axes are at right angles to the direction of emission of the source (10) in order to transform the laser beam coming from the source (10) into a line (T) focussed on the surface of the product (P) to be treated, approximately transversely to the direction of movement of the product (P), characterised in that the laser source is provided with an outlet mirror of variable reflectivity and with an anamorphoser (30) having at least one prism making the incident beam oval and that the optical combination (20) is composed of lenses whereof at least one is substantially cylindrical and divergent, having a focal axis parallel to the direction of ovalisation of the anamorphoser.

2. Device according to Claim 1, characterised in that the optical combination comprises a divergent lens (21) close to the source (10) and a convergent lens (22) close to the product (P).

3. Device according to Claims 1 and 2, characterised in that the convergent lens (22) close to the product (P) to be treated is a cylindro-toric focussing lens.

4. Device according to one of Claims 1 to 3, characterised in that the laser radiation is pulsed.

5. Device according to Claim 4, characterised in that the pulsation frequency is less than 500 Hertz.

6. Device according to Claim 4, characterised in that the pulsation frequency is comprised in the range from 10 to 100 Hertz.

7. Device according to Claims 4 to 6, characterised in that the pulse duration is comprised between 10 nsecs and 10 msecs.

8. Device according to Claim 7, characterised in that the duration of the pulse is approximately 0.2 msecs.

9. Device according to one of Claims 1 to 8, characterised in that the length of the line (T) is such that it occupies the entire width of the moving product (P) and that its width is comprised in the range from 10 to 500 μm.

10. Device according to one of Claims 1 to 9, characterised in that the radiation source (10) is a Nd = YAG laser.

11. Device according to one of Claims 1 to 10, characterised in that the radiation source (10) is a $CO_2$ laser.

**12.** Device according to one of Claims 1 to 11, characterised in that the radiation source (10) is a solid semi-conductor laser constituted by at least one diode.

**13.** Method of using the device according to Claims 1 to 12 for the treatment by laser irradiation of the moving surface of a strip and in particular of a steel sheet, characterised in that the distribution of energy is controlled by means of a resonator comprising an outlet mirror with variable reflectivity and the anamorphoser (30), the optical combination (20) being disposed in a manner such that the laser irradiation is brought about, simultaneously, over an entire rectilinear and virtually transverse line corresponding to the width of the treated product, in such a way that the distribution of energy is uniform over the entire line.

## Patentansprüche

**1.** Vorrichtung zur vorbeilaufenden Behandlung der Oberfläche eines Bands, insbesondere eines magnetischen Eisenblechs durch Laserstrahlung, umfassend eine Laserquelle (10), eine optische Kombination, die zwischen der Quelle (10) und dem Produkt (P) angeordnet und aus Linsen zusammengesetzt ist, deren Fokusachsen senkrecht zur Emissionsrichtung der Quelle (10) derart verlaufen, daß der von der Quelle (10) ausgegebene Laserstrahl in einen Strich (T) gewandelt wird, der auf die Oberfläche des zu behandelnden Produkts (P) annähernd quer zur Bewegungsrichtung des Produkts (P) fokussiert ist,
dadurch gekennzeichnet,
daß die Laserquelle mit einem Ausgangsspiegel mit variablem Reflexionsvermögen und einem Anamorphosator (30) aus wenigstens einem Prisma versehen ist, das den einfallenden Strahl ovalisiert, und daß die optische Kombination (20) aus Linsen zusammengesetzt ist, von denen wenigstens eine im wesentlichen zylindrisch und divergierend ist und eine Fokusachse hat, die parallel zur Ovalisierungsrichtung des Anamorphosators verläuft.

**2.** Vorrichtung nach Anspruch 1, dadurch gekennzeichnet, daß die optische Kombination eine divergierende Linse (21) in der Nähe der Quelle (10) und eine konvergierende Linse (22) in der Nähe des Produkts (P) umfaßt.

**3.** Vorrichtung nach Anspruch 1 und 2, dadurch gekennzeichnet, daß die konvergierende Linse (22) in der Nähe des zu behandelnden Produkts (P) eine torisch-zylindrische Fokussierlinse ist.

**4.** Vorrichtung nach einem der Ansprüche 1 bis 3, dadurch gekennzeichnet, daß die Laserstrahlung gepulst ist.

**5.** Vorrichtung nach Anspruch 4, dadurch gekennzeichnet, daß die Pulsationsfrequenz niedriger als 500 Hertz ist.

**6.** Vorrichtung nach Anspruch 4, dadurch gekennzeichnet, daß die Pulsationsfrequenz im Intervall von 10 bis 100 Hertz enthalten ist.

**7.** Vorrichtung nach Anspruch 4 bis 6, dadurch gekennzeichnet, daß die Pulsationsdauer zwischen 10 ns und 10 ms enthalten ist.

**8.** Vorrichtung nach Anspruch 7, dadurch gekennzeichnet, daß die Pulsationsdauer ungefähr 0,2 ms beträgt.

**9.** Vorrichtung nach einem der Ansprüche 1 bis 8, dadurch gekennzeichnet, daß die Länge des Strichs (T) derart ist, daß er die gesamte Breite des bewegten Produkts (P) einnimmt, und daß seine Breite im Intervall von 10 bis 500 μm enthalten ist.

**10.** Vorrichtung nach einem der Ansprüche 1 bis 9, dadurch gekennzeichnet, daß die Bestrahlungsquelle (10) ein Nd = YA K-Laser ist.

**11.** Vorrichtung nach einem der Ansprüche 1 bis 10, dadurch gekennzeichnet, daß die Bestrahlungsquelle (10) ein $CO_2$-Laser ist.

**12.** Vorrichtung nach einem der Ansprüche 1 bis 11, dadurch gekennzeichnet, daß die Bestrahlungsquelle ein Festkörperhalbleiterlaser ist, der aus wenigstens einer Diode besteht.

**13.** Verfahren zur Verwendung der Vorrichtung nach einem der Ansprüche 1 bis 12 zur vorbeilaufenden Laserstrahlungsbehandlung der Oberfläche eines Bands, und insbesondere eines Eisenblechs, dadurch gekennzeichnet, daß die Energieverteilung mit Hilfe eines Ausgangsspiegelresonators mit variablem Reflexionsvermögen und einem Anamorphosator (30) beherrscht wird, wobei die optische Kombination (20) derart angeordnet ist, daß auf der gesamten geraden Linie sowie praktisch in Querrichtung entsprechend der Breite des behandelten Produkts die Lagerstrahlung derart bewirkt wird, daß die Energieverteilung entlang der gesamten Linie gleichmäßig ist.

FIG.1

FIG.2

FIG.3

EP 0 504 026 B1